# EUROPEAN PATENT APPLICATION

(11) **EP 2 562 239 A1**
(43) Date of publication of application: **27.02.2013**
(21) Application number: 11772066.4
(22) Date of filing: 21.04.2011
(51) Int. Cl.: C11C 3/00, A23D 9/02, C11B 7/00, C11C 3/10

(54) **LIQUID OIL AND FAT, AND PRODUCTION METHOD THEREFOR**

(30) Priority: 22.04.2010 JP 2010099123; 22.04.2010 JP 2010099121
(71) Applicant: Kaneka Corporation, Osaka-shi, Osaka 530-8288 (JP)
(72) Inventor: SAKAKI, Akio, Takasago-shi Hyogo 676-8688 (JP)
(74) Representative: Vossius & Partner
(86) International application number: PCT/JP2011/059817
(87) International publication number: WO 2011/132734

(57) **Abstract**

The invention provides an inexpensive liquid oil having both particularly high liquid properties and oxidation stability and a solid fat containing a large amount of PPP at high yield, from inexpensive palm based oil and fat as a raw material. A palm based oil and fat containing saturated fatty acids in an amount of 70 wt% or less based on the amount of constituent fatty acids is used as a main raw material, the palm based oil and fat is direct-transesterified until the oil and fat obtains an SSS/S2U ratio of 0.5 or more and an S2U content of 14 wt% or less, while keeping the SSS content at 31 wt% or less during the reaction, and then a liquid oil and a solid fat are separated, or an oil and fat containing the palm based oil and fat as a main raw material is direct-transesterified while applying external force to move the oil and fat, and then a liquid oil and a solid fat are separated while keeping the solid fat content at more than 1 wt%, thereby obtaining a liquid oil having an SU2/UUU ratio of 1.9 or less, an SSS content of 2 wt% or less, and a triglyceride bonded with palmitic acid at 2-position content of 10 to 30 wt% and a solid fat containing a large amount of PPP.

## Description

### Technical Field

The present invention relates to a liquid oil using palm based oil and fat as a main raw material, a method for producing the liquid oil, and a food containing the liquid oil. The present invention also relates to a method for producing a solid fat, the solid fat, and a food containing the solid fat.

### Background Art

Soybean oil and rapeseed oil having high liquid properties at low temperature are used as a liquid oil such as a salad oil for a wide variety of purposes. The soybean oil and rapeseed oil have good liquid properties even at low temperature but has poor oxidation stability, thereby readily degrading their flavor by heat or during storage. On this account, there is a demand for an oil and fat having high oxidation stability and high liquid properties.

Palm based oil and fat that is solid at ambient temperature has high stability and price competitiveness. Thus, the production amount of the palm based oil and fat has been increasing year after year. Hence, there are many attempts to produce a liquid oil using the palm based oil and fat as a raw material.

In order to obtain a liquid oil from palm based oil and fat, a method of removing a hard part in the presence or absence of a solvent is widely employed. However, a liquid oil obtained by such a method has insufficient liquid properties because crystals are generated at low temperature. There is a production method in which separation of palm based oil and fat is further repeated to afford a liquid part having a high iodine number (an iodine number of 70) while suppressing the amount of crystals generated at low temperature, thereby affording a liquid oil having characteristics similar to those of salad oil (Non-Patent Document 1). However, the method repeats the separation, resulting in a low yield. In addition, analyzing the liquid oil that was prepared from palm based oil and fat by a similar method and had a high iodine number (an iodine number of 70), it was revealed that the liquid oil had a small content of tri-unsaturated fatty acid glyceride (UUU) of 11.5% by weight, mono-saturated fatty acid-di-unsaturated fatty acid glyceride (SU2)/UUU ratio by weight of 5.3, and a content of tri-saturated fatty acid glyceride (SSS) of 0.02% by weight and had a cloudy point of 2.5°C. This suggested insufficient liquid properties.

Direct transesterification is a reaction in which transesterification proceeds while precipitating high-melting components such as tri-saturated fatty acid glycerides in an oil and fat as crystals. The reaction increases the amounts of tri-saturated fatty acid glyceride (SSS) and tri-unsaturated fatty acid glyceride (UUU) in an oil and fat, and can afford a liquid oil. For example, there is a method of obtaining a liquid oil by direct-transesterifying palm based oil and fat as a raw material and then separating and removing a hard part (Non-Patent Document 2). However, in the method, the direct transesterification is carried out while a reaction mixture is allowed to leave, thereby generating crystals having poor separation performance because flowability of the reaction mixture is lost by the direct transesterification. On this account, in order to obtain a liquid oil, all crystals having poor separation performance are required to be once dissolved and then be recrystallized for separating and removing a hard part. This complicates the process and raises problems in point of production time and production cost. In addition, the tri-saturated fatty acid glyceride content exceeds 2% by weight and liquid properties are insufficient.

There is another method in which palm based oil and fat is transesterified using an alkali catalyst and then a hard part is removed, thereby affording a liquid oil (Patent Document 1). However, the method also leads to a poor yield and insufficient liquid properties.

There is disclosed a method repeating a process of transesterifying palm olein using a lipase capable of performing random transesterification and a process of separating and removing a high-melting fraction, a plurality of times, thereby affording a liquid oil having good liquid properties and an iodine number of 70 or more (Patent Document 2). However, the method is required to repeat the transesterification and the crystallization, separation, and filtration for removing a high-melting fraction, a plurality of times. The method needs much time and effort and also leads to a poor yield and insufficient liquid properties.

Another method of obtaining a liquid oil having high stability is also attempted, which includes hydrogenating soybean oil or rapeseed oil having low stability followed by direct transesterification, and then separating and removing a hard part (Patent Document 3). However, also in the method, the direct transesterification is carried out while a reaction mixture is allowed to leave at 20°C. In order to separate crystals having poor separation performance generated by the direct transesterification to obtain a liquid oil, all the crystals are required to be once dissolved, followed by recrystallization and then a hard part is required to be separated and removed. On this account, the method also needs the addition of a solvent, the dissolution of crystals, and the recrystallization and separation. This complicates the process and raises problems in point of long production time and production cost.

As described above, in each conventional method of obtaining a liquid oil from palm based oil and fat, separation is repeated many times or direct transesterification is carried out in a non-specified condition and then all crystals are once dissolved for recrystallization, followed by separation. This complicates the process and raises problems in point of long production time and production cost.

It is known that a triglyceride bonded with palmitic acid at 2-position (β-position) exhibits much higher absorbability than that of a triglyceride bonded with palmitic acid at α-position (Patent Document 4, [0003]).

However, a solid fat and a liquid oil that are separated and filtered during the production of the liquid oil using palm based oil and fat as a raw material include a large amount of palmitic acid as a constituent fatty acid, but most of palmitic acid is bonded to 1-positian or 3-position.
In the case of a solid fat, a glyceride having palmitic acid at 2-position is used as a raw material of an OPO (2-palmitoyl-1,3-oleoyl triglyceride) structure that is contained in a breast milk oil and fat component in a large amount and as a raw material of a PPO (1,2-dipaimitoyi-3-dioleoyl triglyceride) structure that is used in margarine and chocolate as a raw material. Such a compound can be produced by 1,3-regiospecific transesterification of oleic acid and a triglyceride having palmitic acid at 2-position such as tri-palmitic acid glyceride (PPP) with, for example, a 1,3-regiospecific enzyme.

There is a method of obtaining a highly pure PPP in which palm based oil and fat is used as a raw material and separation is repeated using a solvent (Patent Document 5). However, the palm based oil and fat itself includes a large amount of palmitic acid as a constituent fatty acid but does not include it in a large amount in a PPP form. Thus, in order to obtain a highly pure PPP, it is required to repeat separation using a solvent. On this account, such a method leads to a low total yield and needs to remove a solvent because the solvent is used, resulting in poor productivity. In addition, a large part of the solid fat composition except PPP in a solid fat is composed of glycerides without palmitic acid at 2-position, such as POP and POO. Therefore, the solid fat contains glycerides having palmitic acid at 2-position in a small amount.

Another method is ester synthesis reaction of glycerin and palmitic acid. The method affords a highly pure PPP but has a disadvantage of very high cost because a highly pure fatty acid and highly pure glycerin are needed and the fatty acid is required to be removed after the reaction.

As a natural oil and fat containing a large amount of glycerides having palmitic acid at 2-position, lard is exemplified. However, the lard has various problems, for example, the lard has a distinctive animal odor, generates a return odor with time and is difficult to be used for religious reasons. Therefore, there is a demand for developing a method of producing an oil and fat containing a large amount of glycerides having palmitic acid at 2-position from a vegetable oil as a raw material.

Unlike an oil and fat that contains glycerides having stearic acid and is obtained by hydrogenation of a naturally abundant oil and fat containing oleic acid and linoleic acid in large amounts, the content of an unsaturated fatty acid having a carbon number of 16, such as palmitoleic acid is excessively small in nature. On this account, a glyceride having palmitic acid at 2-position cannot be obtained by hydrogenation of a natural material.

As a method for obtaining OPO, there is a method in which palm based oil and fat containing a large amount of palmitic acid but containing a small amount of a glyceride having palmitic acid at 2-position is chemically random-transesterified, thereby increasing the amount of a glyceride having palmitic acid at 2-position (Patent Document 6). However, the OPO obtained by the method has low liquid properties and thus cannot be used for salad oil and others.

### Citation List

### Patent Literatures

Patent Document 1: US Patent No. 2,442,531 specification
Patent Document 2: JP-A No. 2008-194011
Patent Document 3: JP-A No. 57-165491
Patent Document 4: Japanese Patent No. 3120906
Patent Document 5: JP-A No. 9-75015
Patent Document 6: JP-A No. 61-209544

### Non-Patent Literatures

Non-Patent Document 1: Gijs H. Calliauw, et. al., "Principles of palm olein fractionation: a bit of science behind the technology", Lipid Technology, July 2007, Vol. 19, No. 7, pp. 152-155
Non-Patent Document 2: Regina C. A. Lago and Leopold Hartman, "Directed Interesterification of a Brazilian Palm based oil and fat and Analysis of the Original and Interesterified Oil and its Fractions", J. Sci. Food Agric, 1986, 37, pp. 689-693

### Summary of Invention

### Technical Problem

It is an object of the present invention to provide an inexpensive liquid oil that is obtained from inexpensive palm based oil and fat as a main raw material and has both particularly high liquid properties and oxidation stability and a production method that can produce the liquid oil at high yield and can reduce production cost and production time and has high productivity comparing with a conventional method.
Another object of the present invention is to provide a liquid oil containing large amounts of triglycerides that are bonded with palmitic acid at 2-position (β-position) and exhibit high absorbability.
Another object of the present invention is to provide a method for producing, from palm based oil and fat, a solid fat containing a large amount of glycerides having palmitic acid at 2-position, specifically, a large amount of tri-palmitic acid glyceride (PPP), at low cost concurrently with a liquid oil having excellent liquid properties and oxidation stability.

### Solution to Problem

The present inventors have repeatedly carried out intensive studies in order to solve the problems and, as a result, have obtained the findings below.

By the first production method, a liquid oil having high liquid properties and high oxidation stability can be obtained as follows. The direct transesterification using palm based oil and fat as a main raw material is carried out until the oil obtains an SSS/S2U ratio of 0.5 or more, particularly preferably 2.0 or more, and then the reaction is terminated. After that, removal of a hard part can be carried out even by a dry separation that typically has poor separation efficiency, and the liquid oil can be obtained at a high yield through a one step separation (or, without more than twice steps separation).

As the second production method, direct transesterification is carried out while applying external force to move an oil and fat, thereby generating crystals having good separation performance during the transesterification. Separation in which the solid fat content is kept at more than 1% can lead to efficient direct collection of the crystals generated in the direct transesterification without crystallization. Therefore, a liquid oil can be obtained at high yield even without heating and cooling for separation.

The method can provide a liquid oil having high liquid properties and high oxidation stability and containing a large amount of triglycerides that are bonded with palmitic acid at 2-position (β-position) and exhibit high absorbability.

The present inventors have also found that by direct transesterification of palm based oil and fat as a raw material to increase the amount of glycerides having palmitic acid at 2-position, followed by separation, a solid fat containing a large amount of glycerides having palmitic acid at 2-position can be obtained at low cost concurrently with a liquid oil being bonded with palmitic acid at 2-position (β-position) and having high liquid properties and high oxidation stability.

The present invention is completed on the basis of the various findings.

That is, a first aspect of the present invention relates to a liquid oil derived from palm based oil and fat. The liquid oil is obtained from palm based oil and fat as a main raw material and has an SU2/UUU ratio by weight of 1.9 or less and an SSS content of 2% by weight or less. A preferred aspect relates to the liquid oil, in which the SSS is contained in an amount of 0.5% by weight or less and an S2U is contained in an amount of 10% by weight or less. A more preferred aspect relates to the liquid oil, in which the UUU is contained in an amount of 25% by weight or more. An even more preferred aspect relates to the liquid oil, in which a triglyceride bonded with palmitic acid at 2-position is contained in an amount of 10 to 30% by weight. Another preferred aspect relates to the liquid oil having a cloudy point ranging from 0°C to -12°C.

A second aspect of the present invention relates to a method for producing a liquid oil having an SU2/UUU ratio by weight of 1.9 or less and an SSS content of 2% by weight or less. The method includes using a palm based oil and fat containing a saturated fatty acid in an amount of 70% by weight or less based on the total amount of constituent fatty acids, as a main raw material, direct-transesterifying the palm based oil and fat until the oil and fat obtains an SSS/S2U ratio of 0.5 or more, terminating the reaction, and then separating and removing a hard part. A preferred aspect relates to the method for producing the liquid oil, in which the palm based oil and fat is direct-transesterified until the oil and fat obtains an SSS/S2U ratio of 2.0 or more and then the reaction is terminated. A more preferred aspect relates to the method for producing the liquid oil, in which the palm based oil and fat is direct-transesterified until the oil and fat obtains an S2U content of 14% by weight or less, while the oil and fat keeping an SSS content of 31% by weight or less during the reaction, and then the hard part is separated and removed. Another preferred aspect relates to the method for producing the liquid oil, in which the palm based oil and fat contains the saturated fatty acid in an amount of 3 to 52% by weight based on the total amount of constituent fatty acids. Another preferred embodiment relates to the method for producing the liquid oil, in which the palm based oil and fat is palm olein. Another preferred embodiment relates to the method for producing the liquid oil, in which soybean oil and/or rapeseed oil is used as an oil in addition to the palm based oil and fat. Another preferred embodiment relates to the method for producing the liquid oil, in which the direct transesterification is carried out at a temperature of 0°C to 40°C. Another preferred aspect relates to the method for producing the liquid oil, in which the separation is dry separation. A more preferred aspect relates to the method for producing the liquid oil, in which the dry separation is carried out at a temperature of 0°C to 45°C. An even more preferred aspect relates to the method for producing the liquid oil, in which the dry separation is carried out at a temperature of 0°C to 10°C.

A third aspect of the present invention relates to a method for producing a liquid oil having an SU2/UUU ratio by weight of 1.9 or less and an SSS content of 2% by weight or less. The method includes using a palm based oil and fat containing a saturated fatty acid in an amount of 70% by weight or less based on the total amount of constituent fatty acids, as a main raw material, direct-transesterifying the palm based oil and fat while applying external force thereby to move the oil and fat, and then separating a hard part while keeping the solid fat content at more than 1% by weight. A preferred aspect relates to the method for producing the liquid oil, in which the palm based oil and fat is direct-transesterified until the oil and fat obtains an SSS/S2U ratio of 0.5 or more and then the reaction is terminated. A more preferred aspect relates to the method for producing the liquid oil, in which the palm based oil and fat is direct-transesterified until the oil and fat obtains an S2U content of 14% by weight or less, while the oil and fat keeping an SSS content of 31% by weight or less during the reaction, and then the hard part is separated and removed. Another preferred aspect relates to the method for producing the liquid oil, in which the palm based oil and fat contains the saturated fatty acid in an amount of 3 to 52% by weight based on the total amount of constituent fatty acids. Another preferred aspect relates to the method for producing the liquid oil, in which the palm based oil and fat is palm olein. Another preferred aspect relates to the method for producing the liquid oil, in which soybean oil and/or rapeseed oil is used as an oil and fat in addition to the palm based oil and fat. Another preferred aspect relates to the method for producing the liquid oil, in which the direct transesterification is carried out at a temperature of 0°C to 40°C. Another preferred aspect relates to the method for producing the liquid oil, in which the separation is dry separation. A more preferred aspect relates to the method for producing the liquid oil, in which the dry separation is carried out at a temperature of 0°C to 45°C. An even more preferred aspect relates to the method for producing the liquid oil, in which the dry separation is carried out at a temperature of 0°C to 10°C.

A fourth aspect of the present invention relates to a liquid oil produced by the production method.

A fifth aspect of the present invention relates to a food containing the liquid oil.

The present invention relates to a solid fat that is obtained from a palm based oil and fat having an iodine number of 55 or more as a raw material and contains tri-palmitic acid glyceride in an amount of 45% by weight or more based on the total amount of the solid fat. A preferred aspect relates to the solid fat, in which the solid fat contains the tri-palmitic acid glyceride in an amount of 60% by weight or more based on the total amount of the solid fat. A more preferred aspect relates to the solid fat, in which the solid fat contains a glyceride having palmitic acid at 2-position as a constituent fatty acid in an amount of 65% by weight or more based on the total amount of the solid fat.

In the method for producing the liquid oil of the present invention, the present invention also relates to a method for producing a solid fat concurrently with a liquid oil. The method includes direct-transesterifying the palm based oil and fat, and then separating and removing a liquid oil (soft part). A preferred aspect relates to the method for producing a solid fat, in which the palm based oil and fat is direct-transesterified until the oil and fat obtains an S2U content of 14% by weight or less, while the oil and fat keeping an SSS content of 31% by weight or less during the reaction, and then the soft part is separated and removed. A more preferred aspect relates to the method for producing a solid fat, in which the oil and fat after the direct transesterification is cooled at 0 to 40°C to be crystallized, and then the soft part is separated and removed by dry separation. An even more preferred aspect relates to the method for producing a solid fat, in which the dry separation is carried out at a temperature of 0 to 30°C. A particularly preferred aspect relates to the method for producing a solid fat, in which the solid fat obtained by separating and removing the soft part by the dry separation is warmed to a temperature of 40 to 60°C, and then the soft part is removed again by the dry separation.

### Advantageous Effects of Invention

According to the present invention, using inexpensive palm based oil as a main raw material, an inexpensive liquid oil having both particularly high liquid properties and oxidation stability can be obtained at a high yield. According to the present invention, a liquid oil containing a large amount of triglyceride bonded with palmitic acid at 2-position (β-position) and exhibiting high absorbability can be obtained.
The method for producing the liquid oil of the present invention can reduce production cost and production time comparing with a conventional method, resulting in high productivity.
According to the present invention, using palm based oil and fat as a raw material, a solid fat containing a large amount of glycerides having palmitic acid at 2-position, specifically, containing a large amount of tri-palmitic acid glyceride (PPP) can be produced at low cost, concurrently with a liquid oil.

### Description of Embodiments

The present invention will now be described in further detail.
A liquid oil of the present invention is obtained from palm based oil and fat as a main raw material but has excellent liquid properties and oxidation stability and has a characteristic triglyceride composition in the liquid oil.

In the present invention, fatty acid components in triglycerides are expressed as below.
S: saturated fatty acid; U: unsaturated fatty acid;
SSS: tri-saturated fatty acid glyceride;
SU2: mono-saturated fatty acid-di-unsaturated fatty acid glyceride:
S2U: di-saturated fatty acid-mono-unsaturated fatty acid glycerides;
UUU tri-unsaturated fatty acid glyceride

In the present invention, each triglyceride content was determined by the method below.

### <Determination of Each Triglyceride Content in Oil and Fat>

Each triglycerides content in an oil and fat was determined as follows. An HPLC was used for measurement in accordance with AOCS Official Method Ce 5c-93 and each content was determined by a retention time and an area ratio of each peak. The analysis conditions are shown below.
Eluant: acetonitrile : acetone (70 : 30, volume ratio)
Flow rate: 0.9 mL/min
Column: ODS
Column temperature: 36°C
Detector: differential refractometer

In the present invention, a fatty acid composition in an oil and fat was determined by the method below.

### <Determination of Fatty Acid Composition in Oil and Fat>

A fatty acid composition in an oil and fat can be determined by FID constant-temperature gas chromatography method. The FID constant-temperature gas chromatography method is a method described in "2.4.2.1 Fatty Acid Composition" in the "Standard Methods for the Analysis of Fasts, Oils and Related Materials" edited by Japan Oil Chemists' Society (1996).

A raw material oil and fat used in the present invention is palm based oil and fat and is preferably a palm based oil and fat having an iodine number of 55 or more. The palm based oil and fat is not specifically limited as long as the oil and fat is derived from a palm. Examples of the palm based oil and fat include a refined palm based oil and fat, an unrefined crude oil, and a fractional oil and fat such as palm olein obtained by at least one separation.

The palm based oil and fat used as a raw material preferably contains saturated fatty acids in an amount of 70% by weight or less, more preferably 3 to 70% by weight, even more preferably 3 to 52% by weight, and particularly preferably 30 to 52% by weight, based on the total amount of constituent fatty acids. A palm based oil and fat containing saturated fatty acids in an amount of more than 70% by weight may give an excessively large amount of a hard part during direct transesterification. This may make it difficult to afford crystals having good separation performance, thereby making it difficult to afford a liquid oil having high liquid properties at a high yield. In contrast, a palm based oil and fat containing saturated fatty acids in an amount of less than 3% by weight increases the price of a raw material, thereby increasing the price of an obtained liquid oil. Therefore, the production cost increases and the advantageous effect of the present invention may not be provided. A preferred embodiment of the palm based oil and fat is palm olein. The palm olein in the present invention means a palm olein that is obtained by separating fat from palm based oil and fat collected from pulp of palm fruits and has an iodine number of 55 or more.

In the method for producing the liquid oil of the present invention, an additional oil and fat except the palm based oil and fat may be used as the raw material oil and fat. However, in order to further provide the advantageous effect of the present invention, the additional oil and fat except the palm based oil and fat is preferably contained in an amount of 50% by weight or less, more preferably 30% by weight or less, even more preferably 10%) by weight or less, and most preferably 0% by weight, based on the total amount of the raw material oil and fat. A raw material oil and fat containing the additional oil and fat except the palm based oil and fat in an amount of more than 50% by weight increases the price of a raw material, thereby increasing the price of an obtained liquid oil. Therefore, the production cost increases and the advantageous effect of the present invention may be unlikely to be provided.

The additional oil and fat except the palm based oil and fat is not specifically limited as long as the additional oil and fat is an edible oil and fat that finally affords a liquid oil having an SU2/UUU ratio by weight of 1.9 or less and more preferably 1.1 or less and having an SSS content of 2% by weight or less. Examples of such an oil and fat include soybean oil, rapeseed oil, sunflower oil, olive oil, sesame oil, canola oil, cottonseed oil, rice grain oil, safflower oil, coconut oil, palm kernel oil, shea butter, sal butter, illipe butter, cacao butter, beef tallow, lard, milk fat, and a fractionated oil and fat, a hardened oil, and a transesterified oil of these oils and fats. Among them, soybean oil, rapeseed oil, and others containing saturated fatty acids in an amount of less than 20% by weight based on the total amount of constituent fatty acids are preferred because the advantageous effect of the present invention is readily provided.

Such an oil and fat used in the present invention as the raw material preferably contains saturated fatty acids in an amount of 70% by weight or less, more preferably 3 to 70% by weight, and even more preferably 3 to 52% by weight, based on the total amount of the constituent fatty acids, for a similar reason to that described in the palm based oil and fat.

The liquid oil derived from palm based oil and fat of the present invention preferably has higher liquid properties. The triglyceride composition of the liquid oil is preferably an SU2/UUU ratio by weight of 1.9 or less. The SU2/UUU ratio is preferably less than 1.3 and more preferably 1.1 or less for an application required to have high liquid properties, for example, salad oil. In addition, the liquid oil preferably has an SSS content of 2% by weight or less. For even higher liquid properties, the SU2/UUU ratio by weight is more preferably 1.0 or less and even more preferably 0.95 or less. Preferably, the ratio is as small as possible, for example, 0.9 or less, 0.8 or less, 0.7 or less, 0.6 or less, and 0.5 or less. Considering easy production and oxidation stability, the lower limit of the SU2/UUU ratio by weight is preferably 0.5 or more, more preferably 0.6 or more, even more preferably 0.65 or more, and particularly preferably 0.7 or more. Considering the balance between liquid properties and easy production, the SU2/UUU ratio by weight is preferably in a range of 1.1 to 0.5, more preferably 1.0 to 0.6, even more preferably 0.95 to 0.65, and most preferably 0.9 to 0.7.

The most effective factor to increase the liquid properties is reducing the SSS content in an oil and fat as small as possible. The liquid oil preferably contains SSSs in an amount of 0.5% by weight or less, more preferably 0.3% by weight or less, even more preferably 0.1% by weight or less, particularly preferably 0.05%) by weight or less, and most preferably 0.03% by weight or less. In order to further increase the liquid properties, the liquid oil preferably contains S2Us in an amount of 10% by weight or less and more preferably contains S2Us in an amount of 5% by weight or less based on the total amount, of the liquid oil. The liquid oil preferably contains UUUs in an amount of 12% by weight or more, more preferably 25% by weight or more, even more preferably 35% by weight or more, and most preferably 40% by weight or more.

The liquid oil of the present invention is obtained from palm based oil and fat, preferably a palm based oil and fat having an iodine number of 55 or more, as a main raw material and has a particular fatty acid composition. The liquid oil of the present invention contains a large amount of triglycerides bonded with palmitic acid at 2-position and exhibiting high absorbability.

In the liquid oil derived from palm based oil and fat of the present invention, the content of glycerides that are bonded with palmitic acid at 2-position (β-position) and are generally considered to have high absorbability is preferably as high as possible. Also considering the liquid properties, the content is preferably 10 to 30% by weight, more preferably 13 to 30% by weight, even more preferably it to 30% by weight, particularly preferably 16 to 25% by weight, and most preferably 16 to 20% by weight.

The content of polyunsaturated fatty acids in the liquid oil is preferably as small as possible from the viewpoint of the oxidation stability. On this account, the content is preferably 21% by weight or less, more preferably 20% by weight or less, even more preferably 19% by weight or less, particularly preferably 18% by weight or less, and most preferably 17% by weight or less. In order to reduce the amount of the polyunsaturated fatty acids, the direct transesterification is terminated at an earlier time or separation is carried out at a higher temperature.

The liquid oil derived from palm based oil and fat of the present invention may have any cloudy point as long as the liquid oil composition is satisfied. The cloudy point is preferably 0 to -12°C from the viewpoint of the liquid properties. The cloudy point is more preferably 0 to -10°C and even more preferably 0 to -9°C from the viewpoint of easy production and oxidation stability. The cloudy point is preferably -2°C to -12°C and more preferably -2.5°C to -12°C for an application required to have high liquid properties, for example, salad oil.

The liquid oil derived from palm based oil and fat of the present invention may be used in combination with an additional liquid oil as a mixed liquid oil without problems. However, from the viewpoint of cost and oxidation stability, the amount of the additional liquid oil mixed is preferably as small as possible. The liquid oil derived from palm based oil and fat of the present invention is preferably mixed in an amount of 50% by weight or more, more preferably 70% by weight or more, even more preferably 90% by weight or more, and most preferably 100% by weight, based on the total mount of a mixed liquid oil. A mixed liquid oil containing the liquid oil derived from palm based oil and fat in an amount of less than 50% by weight leads to poor oxidation stability, increases the price of a raw material, and increases the price of an obtained liquid oil. Therefore, the production cost increases and the advantageous effect of the present invention may be unlikely to be provided.

Examples of the additional liquid oil include soybean oil, rapeseed oil, sunflower oil, olive oil, sesame oil, canola oil, cottonseed oil, rice bran oil, and safflower oil.

The present invention includes two methods for producing the liquid oil. The first production method is characterized by the time of termination of direct transesterification. The second production method is characterized by good separation performance of crystals generated during direct transesterification and is characterized by following separation in which all the crystals are not dissolved.

In the first production method, the raw material oil and fat is used. The raw material oil and fat is direet-transesterified until the oil and fat obtains an SSS/S2U ratio of 0.5 or more because an oil and fat having a larger SSS/S2U ratio readily generates crystals having high separation performance to increase the separation efficiency, then the reaction is terminated, and a hard part is separated and removed. The oil and fat preferably has a higher SSS/S2U ratio, that is, 0.75 or more, 1.0 or more, 1.25 or more, 1.5 or more, and 1.75 or more. Most preferably, the direct transesterification is carried out until the oil and fat obtains an SSS/S2U ratio of 2.0 or more. In a preferred embodiment, a direct transesterification of a palm based oil and fat as a main raw material containing saturated fatty acids in an amount of 70% by weight or less based on the total amount of constituent fatty acids is carried out until the oil and fat obtains an S2U content of 14% by weight or less and the reaction is terminated, while the oil and fat composition keeping an SSS content of 31% by weight or less during the reaction, and then separation is carried out. The direct transesterification is carried out for any period of time as long as the above condition is satisfied. However, considering the cost, the reaction is preferably terminated immediately after satisfying the condition.

In the second production method, the raw material oil and fat is used, the raw material oil and fat is direct-transesterified while applying external force thereby to move the oil and fat, and then separation is carried out while keeping the solid fat content at more than 1%. In a preferred embodiment, the direct transesterification is carried out until the oil and fat obtains an SSS/S2U ratio of 0.5 or more. The oil and fat preferably has a larger SSS/S2U ratio, that is, 0.75 or more, 1.0 or more, 1.25 or more, 1.5 or more, and 1.75 or more. Most preferably, the direct transesterification is carried out until the oil and fat obtains an SSS/S2U ratio of 2.0 or more. During the direct transesterification, the oil and fat composition more preferably has an SSS content of 31% by weight or less and, even more preferably, also has an S2U content of 14% by weight or less.

In order to apply external force to move the oil and fat, various means may be adopted, for example, stirring, passing the oil and fat through a reaction tube or the like by applying external force with a pump or other means, and dropping the oil and fat from a high place under gravity. Specifically, for stirring, an apparatus such as a tank having stirring blades and a pin machine is used, thereby moving an oil and fat to be reacted. In order to pass the oil and fat through a reaction tube or the like by external force, for example, with a pump, means such as a static mixer is used, thereby moving an oil and fat to be reacted. If the direct transesterification is carried out while not applying external force such as by stirring not to move the oil and fat at the start of the reaction or during the reaction, crystals having poor separation performance may be generated and the oil and fat during the reaction may be solidified, thereby making the separation difficult.

In the second production method in which the direct transesterification is carried out while applying external force to move the oil and fat, in order to further increase the liquid properties, after the direct transesterification and before the separation, crystallization is preferably performed, and in order to improve the yield, the temperature is preferably raised. However, the temperature rise alone may reduce the liquid properties. In the case of the temperature rise, the solid fat content is kept at more than 1% by weight. If the temperature is raised until the solid fat content reaches 1% by weight or less, the heating increases the cost and the oil and fat may not provide the effect as seed crystals in the case of crystallization. The rate of crystallization is preferably 0.01°C/min to 5°C/min and more preferably 0.1°C/mim to 2°C/min. If the rate of crystallization is out of the range, generated crystals may have poor separation performance.

In the method for producing the liquid oil derived from a palm of the present invention, the direct transesterification as the above is a reaction in which transesterification is carried out in the presence of a catalyst capable of performing transesterification while generating oil and fat crystals. In the present invention, the direct transesterification may be carried out in either a batch-wise manner or a continuous manner. The direct transesterification may be performed in a circulating system. For example, the direct transesterification in the circulating system includes a process (1) in which precipitated SSSs and SSs (diglycerides composed of two saturated fatty acids) in palm based oil and fat are settled in a raw material oil tank A adjusted to a certain temperature and a supernatant liquid is continuously transferred to a transesterification device B and a process (2) in which the supernatant liquid transferred is transesterified at the optimum temperature of a lipase in the transesterification device B and then the reaction mixture is transferred to the raw material oil tank A again. The process (1) and the process (2) are repeated, thereby carrying out the direct transesterification until the oil and fat in the raw material oil tank A obtains an SSS/S2U ratio of 0.5 or more. More preferably, the direct transesterification is carried out until the oil and fat obtains an SSS/S2U ratio of 0.75 or more, 1.0 or more, 1.25 or more, 1.5 or more, and 1.75 or more. Most preferably, the direct transesterification is carried out until the oil and fat obtains an SSS/S2U ratio of 2.0 or more. Even more preferably, the direct transesterification is carried out until the oil and fat obtains an S2U content of 14% by weight or less, while the oil and fat keeping an SSS content of 31% by weight or less. Then, the oil and fat in the raw material tank A is separated into a liquid oil (soft part) and a solid fat (hard part).

The catalyst used in the direct transesterification is not particularly limited and any catalyst, for example, a chemical catalyst and an enzyme catalyst may be used as long as the catalyst can perform transesterification. Among the chemical catalysts, potassium sodium alloy is preferred because it has high activity at low temperature and sodium methoxide is more preferred due to cost and ease in handling. The amount of the chemical catalyst used is not particularly limited and may be an amount used for common transesterification. The amount is preferably 0.01 part by weight to 1 part by weight with respect to 100 parts by weight of a reaction oil and fat from the viewpoint of reaction efficiency and cost. The amount of sodium methoxide is preferably 0.05 part by weight to 0.5 part by weight and more preferably 0.1 part by weight to 0.3 part by weight with respect to 100 parts by weight of a reaction oil and fat from the viewpoint of reaction efficiency, separation efficiency, and the yield of a liquid oil.

The enzyme catalyst is not particularly limited as long as the lipase has transesterification performance and may be either a random transesterification enzyme having no regiospecificity or a transesterification enzyme having 1,3-regiospecificity. However, depending on a desired amount of palmitic acid at 2-position, the random transesterification or the regiospecific transesterification is preferably selected. The amount of an enzyme catalyst used is not particularly limited as long as the transesterification proceeds but is preferably 0.5 part by weight to 20 parts by weight with respect to 100 parts by weight of a reaction oil and fat from the viewpoint of reaction efficiency and cost.

In the present invention, the temperature during the direct transesterification is not particularly limited as long as the high-melting glyceride is crystallized. At the start of the reaction, the temperature is preferably a temperature at which catalytic activity is a maximum in order to efficiently carry out the reaction. Specifically, when sodium methoxide is used, the temperature is preferably 50°C to 120°C, and when potassium sodium alloy is used, the temperature is preferably 25 to 270°C. When an enzyme catalyst is used, the temperature is preferably 50°C to 70°C. When a chemical catalyst is used, the direct transesterification temperature is preferably changed to 0 to 40°C and more preferably to 10°C to 40°C after 5 to 20 minutes of the reaction. When an enzyme catalyst is used, the direct transesterification temperature is preferably changed to 0°C to 40°C and more preferably to 10°C to 40°C after 3 to 18 hours of the reaction. In the present invention, the final reaction temperature is regarded as the direct transesterification temperature.

In the direct transesterification in the production method of the present invention, when an oil and fat is stirred, the stirring is preferably performed at a speed of 1,000 rpm or less, more preferably 600 rpm or less, and even more preferably 300 to 1 rpm, from the viewpoint of imparting flowability to the oil and fat and generating crystals having good separation performance.

The final amount of crystals after the direct transesterification is preferably 3% by weight to 60% by weight and more preferably 5% by weight to 40% by weight based on the total amount of the reaction oil and fat from the viewpoint of separation efficiency. The amount of crystals can be controlled by the reaction time. Preferably, the direct transesterification is carried out at 0 to 40°C and preferably at 10°C to 40°C, for 1 to 48 hours in the case that a chemical catalyst is used or for 3 to 120 hours in the case that an enzyme catalyst is used.

The method for terminating the direct transesterification is not particularly limited as long as the reaction is terminated. When a chemical catalyst is used, water, an aqueous citric acid solution, or the like is added. From the viewpoint of suppressing the deterioration of a device during separation, an acidic substance is preferably added for neutralization and termination of the reaction. The amount of a terminating agent is preferably 0.1 part by weight to 5 parts by weight and more preferably 0.2 part by weight to 1 part by weight with respect to 100 parts by weight of a reaction oil and fat from the viewpoint of separation efficiency. When the amount of a terminating agent is more than 5 parts by weight, filtration efficiency may be lowered during separation and the yield of a liquid oil may be reduced. When the amount of a terminating agent is less than 0.1 part by weight, the product may have a dark color or the reaction may not be terminated.

The time for terminating the direct transesterification is preferably after the reaction proceeds until the oil and fat composition during the reaction obtains an SSS content of 31% by weight or less and an S2U content of 14% by weight or less from the viewpoint of the yield of the liquid oil. More preferably, the time is after the reaction proceeds until the oil and fat composition obtains an SU2/UUU ratio by weight of 1.9 or less and even more preferably 1.1 or less from the viewpoint of the liquid properties of the liquid oil.

Meanwhile, as the direct transesterification proceeds, the SSS content in an oil and fat during the reaction increases, thereby excessively increasing the amount of a solid fat in the reaction system. This makes the separation difficult. Thus, from the viewpoint of separation efficiency, the reaction is preferably terminated before the SSS content in the oil and fat during the reaction exceeds 50% by weight, the reaction is more preferably terminated before the SSS content exceeds 31% by weight, and the reaction is even more preferably terminated during the SSS content is between 1% by weight and 31% by weight. The content is more preferably 1% by weight to 25% by weight, particularly preferably 1 to 20% by weight, and most preferably 1% by weight to 15% by weight.

As the direct transesterification proceeds, the S2U content decreases in an oil and fat during the reaction. From the viewpoint of the liquid properties of the liquid oil obtained by separation after the reaction, the reaction is preferably carried out until the S2U content reaches 14% by weight or less in the oil and fat during the reaction and then is terminated, more preferably until the content reaches 10% by weight or less, even more preferably until the content reaches 7% by weight or less, and most preferably until the content reaches 5% by weight or less.

The separation method in the method for producing the liquid oil of the present invention may be either solvent separation or dry separation. However, since the solvent separation requires equipment cost and running cost due to the use of a solvent, the dry separation that uses no solvent is preferred. Usable examples of the solvent include hexane and acetone. In the case of the dry separation, the separation temperature is preferably 0 to 45°C. In order to obtain higher liquid properties, the separation temperature is preferably 30°C or less, more preferably 20°C or less, and even more preferably 10°C or less. Including the aspect of yield, the separation temperature is most preferably 0 to 10°C.

The liquid oil derived from palm based oil and fat of the present invention can be used in a manner in which a common liquid oil such as soybean oil and rapeseed oil is used and typically can be used as a raw material of processed oil and fat products such as dressing, mayonnaise, cream, margarine, and shortening or, without treatment, can be used as salad oil, frying oil, and others.

A solid fat of the present invention is obtained from soft palm based oil and fat as a raw material and is characterized by containing a certain amount of tri-palmitic acid glyceride.

In the solid fat of the present invention, the content of tri-palmitic acid glyceride (PPP) is preferably 45% by weight or more and more preferably 60% by weight or more. A solid fat having a PPP content of less than 45% by weight cannot efficiently prepare an oil and fat composition in which the constituent fatty acid at 2-position is palmitic acid, from the solid fat as a raw material. The solid fat preferably contains glycerides having palmitic acid at 2-position as a constituent, fatty acid in an amount of 65% by weight or more based on the total amount of the solid fat. A solid fat containing glycerides having palmitic acid at 2-position as a constituent fatty acid in an amount of less than 65% by weight may not efficiently prepare an oil and fat composition in which the constituent fatty acid at 2-position is palmitic acid, from the solid fat as a raw material.

The solid fat of the present invention as the above can be produced concurrently with the liquid oil having excellent liquid properties and oxidation stability of the present invention. Therefore, the present invention can easily produce, using palm based oil and fat as a raw material, an oil and fat containing a large amount of glycerides having palmitic acid at 2-position, specifically, containing a large amount of PPP at low cost.

The raw material used for producing the solid fat of the present invention is mainly palm based oil and fat. Examples of the palm based oil and fat include a refined palm based oil and fat, an unrefined crude oil, and a fractional oil obtained by at least one separation. The palm based oil and fat preferably has an iodine number of 55 or more. A palm based oil and fat having an iodine number of less than 55 may excessively reduce the amount of the concurrently produced liquid oil derived from palm based oil and fat.

In the first production method of a solid fat of the present invention, a palm based oil and fat containing saturated fatty acids in an amount of 70% by weight or less based on the total amount of constituent fatty acids is used as a main raw material, the palm based oil and fat is direct-transesterified until the oil and fat obtains an SSS/S2U ratio of 0.5 or more, the reaction is terminated, and then a liquid oil is separated and removed, thereby producing a solid fat concurrently with the liquid oil. In a preferred embodiment, the direct transesterification is carried out until the oil and fat obtains an SSS/S2U ratio of 0.75 or more. More preferably, the direct transesterification is carried out until the oil and fat obtains a higher SSS/S2U ratio of 1.0 or more, 1.25 or more, 1.5 or more, 1.75 or more, or 2.0 or more. Even more preferably, the direct transesterification is carried out until the oil and fat obtains an S2U content of 14% by weight or less and the reaction is terminated, while the oil and fat composition keeping an SSS content of 31% by weight or less during the reaction. In the second production method of a solid fat of the present invention, a palm based oil and fat containing saturated fatty acids in an amount of 70% by weight or less based on the total amount of constituent fatty acids is used as a main raw material, the palm based oil and fat is direct-transesterified while applying external force thereby to move the oil and fat, and then a liquid oil is separated and removed while keeping the solid fat content at more than 1% by weight, thereby producing a solid fat concurrently with the liquid oil. In a preferred embodiment, the direct transesterification is carried out until the oil and fat obtains an SSS/S2U ratio of 0.5 or more. More preferably, the direct transesterification is carried out until the oil and fat obtains a higher SSS/S2U ratio of 0.75 or more, 1.0 or more, 1.25 or more, 1.5 or more, 1.75 or more, or 2.0 or more. In an even more preferred embodiment, the direct transesterification using the palm based oil and fat as a raw material is carried out until the oil and fat obtains an S2U content of 14% by weight or less and the reaction is terminated, while the oil and fat composition keeping an SSS content of 31% by weight or less during the reaction, and then a liquid oil is separated and removed. The direct transesterification is carried out for any period of time as long as the above condition is satisfied. However, considering the cost, the reaction is preferably terminated immediately after satisfying the condition. The direct transesterification for producing the solid fat of the present invention is a reaction in which transesterification is carried out in the presence of a catalyst capable of performing transesterification while generating oil and fat crystals.

In the method for producing a solid fat of the present invention, the direct transesterification may be carried out in either a batch-wise manner or a continuous manner. The direct transesterification may be performed in a circulating system. The time for terminating the direct transesterification is, as described above, preferably after the reaction is carried out until the oil and fat during the reaction obtains an SSS content of 31% by weight or less and an S2U content of 14% by weight or less from the viewpoint of the yield of the liquid oil. For example, the direct transesterification in the circulating system includes a process (1) in which precipitated SSSs and SSs (diglycerides composed of two saturated fatty acids) in palm based oil and fat are settled in a raw material oil tank A adjusted to a certain temperature and a supernatant liquid is continuously transferred to a transesterification device B and a process (2) in which the supernatant liquid transferred is transesterified at the optimum temperature of a lipase in the transesterification device B and then the reaction mixture is transferred to the raw material oil tank A again. The process (1) and the process (2) are repeated, thereby carrying out the direct transesterification until the oil and fat obtains an S2U content of 14% by weight or less, while the oil and fat keeping an SSS content of 31% by weight or less in the raw material oil tank A. Then, the oil and fat in the raw material tank A is separated into a liquid oil (soft part) and a solid fat (hard part).

The separation method in the method for producing a liquid oil and a solid fat of the present invention may be either solvent separation or dry separation. However, since the solvent separation requires equipment cost and running cost due to the use of a solvent, the dry separation that uses no solvent is preferred

Usable examples of the solvent include hexane and acetone. The separation temperature of the dry separation is preferably 0°C to 30°C and more preferably 20°C or less in order to obtain a liquid oil with sufficient liquid properties. Including the aspect of yield, the separation temperature is even more preferably 0°C to 10°C.

In order to increase the content of glycerides having palmitic acid at 2-position in the solid fat, preferably, once the dry separation is carried out, then the separation temperature is raised, and the separation is carried out at 40°C to 60°C again. Considering the content and the yield of glycerides having palmitic acid at 2-position, the separation is more preferably carried out at 45°C to 55°C once again.

The solid fat of the present invention can be used as a raw material of processed oil and fat products such as cream, margarine, shortening, and chocolate or, without treatment, can be used as a base material of microcapsules. The solid fat of the present invention can also be used, for example, as a raw material of an oil and fat having an OPO (2-palmitoyl-1,3-dioleoyl triglyceride) structure and as a raw material of an oil and fat having a PPO (1,2-dipalmitoyl-3-aleoyl triglyceride) structure.

### Examples

Hereinafter, the present invention will be described in further detail with reference to examples but the present invention is not intended to be limited to the examples.

### <Determination of Fatty Acid Composition>

The fatty acid composition in an oil and fat was determined by the method described above.

### <Determination of Each Tiglyceride Content in Oil and Fat>

Each triglyceride content in an oil and fat was determined by the method described above.

### <Determination of Content of Glyceride Having Palmitic Acid at 2-position>

After mixing 7.5 g of an oil and fat to be analyzed and 22.5 g of ethanol, 1.2 g of Novozym 435 (manufactured by Novozymes Japan Ltd.) was added, and the whole was reacted at 30°C for 4 hours. The reacted solution was concentrated, and then the product was separated by silica gel column chromatography (type: silica gel 60 (0.063 to 0.200 mm) for column chromatography, manufactured by Merck) into each component of triglycerides, diglycerides, and monoglycerides. Among them, the monoglycerides were collected. In 5 ml of isooctane, 0.05 g of the monoglycerides was dissolved, then 1 ml of 0.2 mol/L sodium methoxide solution in methanol was added, and the whole was reacted at 70°C for 15 minutes, thereby methyl-esterifying the monoglycerides. The reacted solution was neutralized with acetic acid and then an appropriate amount of water was added. The organic phase was analyzed with a gas chromatograph (model: 6890N, manufactured by Agilent) and the content of the glyceride having palmitic acid at 2-position was determined from retention times and peak areas.

### <Cloud Point>

Cloud point was determined in accordance with "Standard Methods for the Analysis of Fats, Oils and Related Materials, 2.2.7-1996, Cloudy point".

### <Evaluation of Salad Oil Standard>

Measurement was carried out in accordance with "Standard Methods for the Analysis of Fats, Oils and Related Materials, 2.2.8.1-1996, Cooling test (part 1)" and a sample that did not become cloudy for 5.5 hours or more was evaluated as "A".

### <CDM Test (Oxidation Stability)>

A CDM value was determined in accordance with "Standard Methods for the Analysis of Fats, Oils and Related Materials, 2.5.1.2-1996, CDM test".

### <Iodine Number>

Measurement was carried out in accordance with "Standard Methods for the Analysis of Fats, Oils and Related Materials, 3.3.3-1996, Iodine number (Wijs-Cyclohexane Method)".

### (Example 1) Production of Liquid oil

Into a separable flask, 5,000 parts by weight of palm olein (an iodine number of 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 18% by weight and the S2U content reached 13.5% by weight based on the total amount of oil and fat during the reaction, 50 parts by weight of water was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warn water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 10°C, the temperature was maintained for crystallization until the total time from the start of temperature drop reached 24 hours. After the crystallization, the mixture was filtered with a filter press (pressurized to 3 MPa) to afford 3,200 parts by weight of liquid oil (yield: 64%) having an SU2/UUU ratio by weight of 1.1 in the triglyceride composition.

### (Example 2) Production of Liquid oil

Into a separable flask, 5,000 parts by weight of palm olein (an iodine number of 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 27% by weight and the S2U content reached 1.1.6% by weight based on the total amount of oil and fat during the reaction, 50 parts by weight of water was added as a reaction terminating agent to terminate the reaction. Then, the reaction mixture was treated in the same manner as in Example 1 to afford 2,700 parts by weight of liquid oil (yield: 54%) having an SU2/UUU ratio by weight of 1.1 in the triglyceride composition.

### (Example 3) Production of Liquid oil

Into a separable flask, 5,000 parts by weight of palm olein (an iodine number of 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours and further direct-transesterified at 25°C for about 24 hours. After confirming that the SSS content reached 22% by weight and the S2U content reached 9.5% by weight based on the total amount of oil and fat during the reaction, 50 parts by weight of water was added as a reaction terminating agent to terminate the reaction. Then, the reaction mixture was treated in the same manner as in Example 1 to afford 3,100 parts by weight of liquid oil (yield: 62%) having an SU2/UUU ratio by weight of 0.9 in the triglyceride composition.

### (Example 4) Production of Liquid oil

Into a separable flask, 5,000 parts by weight of palm olein (an iodine number of 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours and further direct-transesterified at 25°C for about 24 hours. After confirming that the SSS content reached 30% by weight and the S2U content reached 9.4% by weight based on the total amount of oil and fat during the reaction, 50 parts by weight of water was added as a reaction terminating agent to terminate the reaction. Then, the reaction mixture was treated in the same manner as in Example 1 to afford 2,640 parts by weight of liquid oil (yield: 53%) having an SU2/UUU ratio by weight of 0.9 in the triglyceride composition.

### (Example 5) Production of Liquid oil

Into a separable flask, 5,000 parts by weight of palm olein (an iodine number of 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours, at 27.5°C for about 2 hours, at 25°C for about 12 hours, and at 22.5°C for about 24 hours. After confirming that the SSS content reached 23% by weight and the S2U content reached 10.6% by weight based on the total amount of oil and fat during the reaction, 50 parts by weight of water was added as a reaction terminating agent to terminate the reaction. Then, the reaction mixture was treated in the same manner as in Example 1 to afford 3,000 parts by weight of liquid oil (yield: 60%) having an SU2/UUU ratio by weight of 0.7 in the triglyceride composition.

### (Example 6) Production of Liquid oil

Into a separable flask, 5,000 parts by weight of palm olein (an iodine number of 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours, at 27.5°C for about 2 hours, at 25°C for about 12 hours, and at 22.5°C for about 24 hours. After confirming that the SSS content reached 30% by weight and the S2U content reached 8.0% by weight based on the total amount of oil and fat during the reaction, 50 parts by weight of water was added as a reaction terminating agent to terminate the reaction. Then, the reaction mixture was treated in the same manner as in Example 1 to afford 2,600 parts by weight of liquid oil (yield: 52%) having an SU2/UUU ratio by weight of 0.7 in the triglyceride composition.

### (Example 7) Production of Liquid oil

Into a separable flask, 5,000 parts by weight of palm olein (an iodine number of 64) was charged and vacuum dehydration was carried out at 90°C while stirring at 100 rpm. Then, 10 parts by weight of sodium methoxide was added and the temperature was maintained at 90°C for 20 minutes, followed by cooling. The palm olein was direct-transesterified at 30°C for about 8 hours, at 27.5°C for about 2 hours, at 25°C for about 2 hours, at 22.5°C for about 5 hours, and at 18°C for about 15 hours. After confirming that the SSS content reached 29% by weight and the S2U content reached 3.8% by weight based on the total amount of oil and fat during the reaction, 50 parts by weight of water was added as a reaction terminating agent to terminate the reaction. Then, the reaction mixture was treated in the same manner as in Example 1 to afford 2,700 parts by weight of liquid oil (yield: 54%) having an SU2/UUU ratio by weight of 0.5 in the triglyceride composition.

### (Example 8) Production of Liquid oil

Into a separable flask. 5,000 parts by weight of palm olein (an iodine number of 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 36°C for about 8 hours. After confirming that the SSS content reached 13% by weight and the S2U content reached 16.5% by weight based on the total amount of oil and fat during the reaction, 50 parts by weight of water was added as a reaction terminating agent to terminate the reaction. Then, the reaction mixture was treated in the same manner as in Example 1 to afford 3,200 parts by weight of liquid oil (yield: 64%) having an SU2/UUU ratio by weight of 1.3 in the triglyceride composition.

### (Comparative Example 1) Production of Liquid oil

Into a separable flask, 5,000 parts by weight of palm oil (an iodine number of 52) was charged and vacuum dehydration was carried out at 90°C while stirring at 100 rpm. Then, 5 parts by weight of sodium methoxide was added and the temperature was maintained at 90°C for 20 minutes, followed by cooling. The palm oil was direct-transesterified at 30°C for about 8 hours and further direct-transesterified at 25°C for about 24 hours. After confirming that the SSS content reached 33% by weight and the S2U content reached 8.6% by weight based on the total amount of oil and fat during the reaction, 50 parts by weight of water was added as a reaction terminating agent to terminate the reaction. Then, the reaction mixture was treated in the same manner as in Example 1 to afford 1,800 parts by weight of liquid oil (yield: 36%) having an SU2/UUU ratio by weight of 0.9 in the triglyceride composition.

### (Comparative Example 2) Production of Liquid oil

Into a separable flask, 5,000 parts by weight of palm olein (an iodine number of 57) was charged and vacuum dehydration was carried out at 90°C while stirring at 100 rpm. Then, 10 parts by weight of sodium methoxide was added and the temperature was maintained at 90°C for 20 minutes, followed by cooling. The palm olein was direct-transesterified at 30°C for about 8 hours, at 27.5°C for about 2 hours, at 25°C for about 2 hours, at 22.5°C for about 5 hours, and at 18°C for about 15 hours. After confirming that the SSS content reached 37% by weight and the S2U content reached 3.7% by weight based on the total amount of oil and fat during the reaction, 50 parts by weight of water was added as a reaction terminating agent to terminate the reaction. Then, the reaction mixture was treated in the same manner as in Example 1 to afford 850 parts by weight of liquid oil (yield: 17%) having an SU2/UUU ratio by weight of 0.5 in the triglyceride composition.

### (Examples 9 to 18) Analysis of Liquid oil

The fatty acid composition, the triglyceride composition, the cloudy point, the iodine number, and the CDM value of each liquid oil (Examples 9 to 18) obtained by the production methods of Examples 1 to 8 and Comparative Examples 1 and 2 were determined. The evaluation of salad oil standard of each sample was also carried out. Table 1 lists the results.

**[Table 1]**

| Table 1 Analysis value and evaluation of raw material oil and fat and liquid oil and fat | | | | | | | | | | | |
|---|---|---|---|---|---|---|---|---|---|---|---|
| Liquid oil and fat | | Example 9 | Example 10 | Example 11 | Example 12 | Example 13 | Example 14 | Example 15 | Example 16 | Example 17 | Example 18 |
| Method for producing liquid oil and fat | | Example 1 | Example 2 | Example 3 | Example 4 | Example 5 | Example 6 | Example 7 | Example 8 | Comparative Example 1 | Comparative Example 2 |
| Analysis value of raw material oil and fat | Iodine number | 64 | 57 | 64 | 57 | 64 | 57 | 64 | 64 | 52 | 57 |
| | Saturated fatty acid content (wt%) *1 | 39 | 46 | 39 | 46 | 39 | 46 | 39 | 39 | 50 | 46 |
| | SSS (wt%) *1 | 0.04 | 1.12 | 0.04 | 1.12 | 0.04 | 1,12 | 0.04 | 0.04 | 6.51 | 1.12 |
| | S2U (wt.%) *1 | 28.91 | 44.33 | 28.91 | 44.33 | 28.91 | 44.33 | 28.91 | 28.91 | 43.90 | 44.33 |
| Analysis value of liquid oil and fat | Yield (%) of liquid oil and fat | 64 | 54 | 62 | 53 | 60 | 52 | 54 | 64 | 36 | 17 |
| | Iodine number | 81 | 81 | 84 | 84 | 89 | 89 | 91 | 78 | 81 | 91 |
| | Saturated fatty acid content (wt%) *2 | 21.8 | 21.9 | 20.2 | 20.1 | 18.5 | 18.2 | 14.2 | 23.6 | 20.1 | 14.4 |
| | Polyunsaturated fatty acid content (wt%) *2 | 16.9 | 17.1 | 18,6 | 18.5 | 19.3 | 19.5 | 20.3 | 16.0 | 18.7 | 20.6 |
| | SSS(wt%)*2 | 0.02 | 0.02 | 0.02 | 0.01 | 0.01 | 0.02 | 0.01 | 0.04 | 0.02 | 0.01 |
| | S2U (wt%) *2 | 8.00 | 7.89 | 7.69 | 7.15 | 6.62 | 6.53 | 4.65 | 8.45 | 6.97 | 4.77 |
| | SU2 (wt%) *2 | 41.78 | 42.13 | 37.92 | 38.32 | 34.40 | 3:3.96 | 27.74 | 45.61 | 38.98 | 27.99 |
| | UUU (wt%) *2 | 39.12 | 38.67 | 42.96 | 43.09 | 47.19 | 47.72 | 55.31 | 34.85 | 42.87 | 55.54 |
| | SU2/UUU *2 | 1.1 | 1.1 | 0.9 | 0.9 | 0.7 | 0.7 | 0.5 | 1.3 | 0.9 | 0.5 |
| | Diglyceride content (wt%) *2 | 8.72 | 8.83 | 8.82 | 9 | 9.32 | 9.15 | 9.61 | 8.86 | 9.42 | 9.02 |
| | Glyceride having palmitic acid at 2-position (wt%) | 19.5 | 19.6 | 18.2 | 18.1 | 16.6 | 16.4 | 13.5 | 20.9 | 18.3 | 13.5 |
| | Cloudy Point (°C) | -3.3 | -3 | -4.7 | -5.2 | -7.9 | -8.4 | -11.2 | 1.2 | -5.7 | -10,8 |
| | CDM value (h) | 7.2 | 7.1 | 6.8 | 6.9 | 5.9 | 5.8 | 5.4 | 7.8 | 6.7 | 5.3 |
| | Salad oil standard | A | A | A | A | A | A | A | B | A | A |

| | | | | | | | | | | | |
|---|---|---|---|---|---|---|---|---|---|---|---|
| *1 Content based on the total amount of a raw material oil and fat; *2 Content, based on the total amount of a liquid oil and fat. | | | | | | | | | | | |

### (Example 19) Production of Liquid oil

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 34°C for 24 hours. At the time, it was confirmed that the SSS content reached 20% by weight and the S2U content reached 10.5% by weight based on the total amount of oil and fat during the reaction, and then 15 parts by weight of 25% aqueous citric acid solution was added as a reaction terminating agent to terminate the reaction. Next, the temperature was lowered at a rate of 0.2°C/min and was maintained at 10°C for 16 hours for crystallization. Then, the mixture was filtered with a filter press (pressurized to 3 MPa) to afford 3,200 parts by weight of liquid oil (yield: 64%).

### (Example 20) Production of Liquid oil

Into a separable flask, 5,000 parts by weight of palm olein (iodine number: 64) was charged and vacuum dehydration was carried out at 90°C while stirring at 100 rpm. Then, 10 parts by weight of sodium methoxide was added and the temperature was maintained at 90°C for 20 minutes, followed by cooling. After the temperature reached 30°C, 25 parts by weight of a tri-palmitin powder (manufactured by Nacalai Tesque) was added and direct transesterification was carried out for 4 hours. At the time, it was confirmed that the SSS content reached 20% by weight and the S2U content reached 11.5% by weight based on the total amount of oil and fat during the reaction, and then 30 parts by weight of 25% aqueous citric acid solution was added as a reaction terminating agent to terminate the reaction. Next, the temperature was lowered at a rate of 0.2°C/min and was maintained at 10°C for 16 hours for crystallization. Then, the mixture was filtered with a filter press (pressurized to 3 MPa) to afford 3,200 parts by weight of liquid oil (yield: 64%).

### (Example 2 1) Production of Liquid oil

Into a separable flask, 5,000 parts by weight of palm olein (iodine number: 64) was charged and vacuum dehydration was carried out at 90°C while stirring at 300 rpm. Then, 5 parts by weight of sodium methoxide was added and the temperature was maintained at 90°C for 20 minutes, followed by cooling. The palm olein was direct-transesterified at 34°C for 24 hours. At the time, it was confirmed that the SSS content reached 20% by weight and the S2U content reached 10.5% by weight based on the total amount of oil and fat during the reaction, and then 15 parts by weight of 25% aqueous citric acid solution was added as a reaction terminating agent to terminate the reaction. Next, the temperature was lowered at a rate of 0.2°C/min and was maintained at 10°C for 16 hours for crystallization. Then, the mixture was filtered with a filter press (pressurized to 3 MPa) to afford 3,200 parts by weight of liquid oil (yield: 64%).

### (Example 22) Production of Liquid oil

Into a separable flask, 5,000 parts by weight of palm olein (iodine number: 64) was charged and vacuum dehydration was carried out at 90°C while stirring at 600 rpm. Then, 5 parts by weight of sodium methoxide was added and the temperature was maintained at 90°C for 20 minutes, followed by cooling. The palm olein was direct- transesterified at 34°C for 24 hours. At the time, it was confirmed that the SSS content reached 20% by weight and the S2U content reached 10.5% by weight based on the total amount of oil and fat during the reaction, and then 15 parts by weight of 25% aqueous citric acid solution was added as a reaction terminating agent to terminate the reaction. Next, the temperature was lowered at a rate of 0.2°C/min and was maintained at 10°C for 16 hours for crystallization. Then, the mixture was filtered with a filter press (pressurized to 3 MPa) to afford 3,150 parts by weight of liquid oil (yield: 63%).

### (Example 23) Production of Liquid oil

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 38°C for 18 hours. At the time, it was confirmed that the SSS content reached 16% by weight and the S2U content reached 13.0% by weight based on the total amount of oil and fat during the reaction, and then 15 parts by weight of 25% aqueous citric acid solution was added as a reaction terminating agent to terminate the reaction. Then, the mixture was filtered with a filter press (pressurized to 3 MPa) to afford 3,850 parts by weight of liquid oil (yield: 77%).

### (Example 24) Production of Liquid oil

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 32°C for 16 hours, followed by cooling. The palm olein was further direct-transesterified at 10°C for 18 hours. At the time, it was confirmed that the SSS content reached 22% by weight and the S2U content reached 9.5% by weight based on the total amount of oil and fat during the reaction, and then 15 parts by weight of 25% aqueous citric acid solution was added as a reaction terminating agent to terminate the reaction. Then, the mixture was filtered with a filter press (pressurized to 3 MPa) to afford 3,100 parts by weight of liquid oil (yield: 62%).

### (Example 25) Production of Liquid oil

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 32°C for 16 hours, followed by cooling. The palm olein was further direct-transesterified at 10°C for 18 hours. At the time, it was confirmed that the SSS content reached 22% by weight and the S2U content reached 9.5% by weight based on the total amount of oil and fat during the reaction, and then 15 parts by weight of 25% aqueous citric acid solution was added as a reaction terminating agent to terminate the reaction. Then, the temperature was raised to 30°C and the mixture was filtered with a filter press (pressurized to 3 MPa) to afford 3,350 parts by weight of liquid oil (yield: 67%).

### (Example 26) Production of Liquid oil

Into a separable flask, 5,000 parts by weight of palm olein (iodine number: 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 32°C for 12 hours, followed by cooling. The palm olein was further direct-transesterified at 25°C for 20 hours. At the time, it was confirmed that the SSS content reached 30% by weight and the S2U content reached 8.0% by weight based on the total amount of oil and fat during the reaction, and then 15 parts by weight of 25% aqueous citric acid solution was added as a reaction terminating agent to terminate the reaction. Next, the temperature was lowered at a rate of 0.17°C/min and was maintained at 10°C for 16 hours for crystallization. Then, the mixture was filtered with a filter press (pressurized to 3 MPa) to afford 2,700 parts by weight of liquid oil (yield: 54%).

### (Example 27) Production of Liquid oil

Into a separable flask, 5,000 parts by weight of palm olein (iodine number: 64) was charged and vacuum dehydration was carried out at 90°C while stirring at 100 rpm. Next, the temperature was lowered to 50°C, and 500 parts by weight of lipase ("Lipozyme TL IM" manufactured by Novozymes) was added. The temperature was maintained at 50°C for 4 hours, followed by cooling. The palm olein was direct-transesterified at 36°C for 38 hours, followed by cooling. The palm olein was further direct-transesterified at 10°C for 18 hours. At the time, it was confirmed that the SSS content reached 22% by weight and the S2U content reached 9.5% by weight based on the total amount of oil and fat during the reaction, and then the mixture containing the enzyme was filtered with a filter press (pressurized to 3 MPa) at 10°C to afford 2,850 parts by weight of liquid oil (yield: 57%).

### (Example 37) Production of Liquid oil

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 34°C for 24 hours. At the time, it was confirmed that the SSS content reached 20% by weight and the S2U content reached 10.5% by weight based on the total amount of oil and fat during the reaction, and then 15 parts by weight of 25% aqueous citric acid solution was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 10°C, the temperature was maintained for crystallization until the total time from the start of temperature drop reached 24 hours. After the crystallization, the mixture was filtered with a filter press (pressurized to 3 MPa) to afford 3,200 parts by weight of liquid oil (yield: 64%).

### (Comparative Example 4) Production of Liquid oil

Into a separable flask, 5,000 parts by weight of palm olein (iodine number: 64) was charged and vacuum dehydration was carried out at 90°C while stirring at 100 rpm. Then, 10 parts by weight of sodium methoxide was added and the temperature was maintained at 90°C for 20 minutes, followed by cooling. The palm olein was direct-transesterified at 30°C for 1 hour, then the stirring was stopped, and the palm olein was further direct-transesterified for 3 hours. At the time, it was confirmed that the SSS content reached 22% by weight and the S2U content reached 9.5%) by weight based on the total amount of oil and fat during the reaction. Then, the oil and fat was tried to be filtered. However, since the oil and fat was in a solid state, it could not be transferred to a filter press and could not be separated.

Table 2 lists the analysis values of each liquid oil obtained in Examples 19 to 27 and 37 and Comparative Example 4.

**[Table 2]**

| Table 2 Analysis value of raw material oil and fat and liquid oil and fat | | | | | | | | | | | | |
|---|---|---|---|---|---|---|---|---|---|---|---|---|
| | | Example 19 | Example 20 | Example 21 | Example 22 | Example 23 | Example 24 | Example 25 | Example 26 | Example 27 | Example 37 | Comparative Example 4 |
| Analysis value of raw material oil and fat | Iodine number | 64 | 64 | 64 | 64 | 64 | 64 | 64 | 57 | 64 | 64 | 64 |
| | Saturated fatty acid content (wt%)*1 | 39 | 39 | 39 | 39 | 39 | 39 | 39 | 46 | 39 | 39 | 39 |
| | SSS content (wt%) *1 | 0.04 | 0.04 | 0.04 | 0.04 | 0.04 | 0.04 | 0.04 | 1.12 | 0.04 | 0.04 | 0.04 |
| | S2U content (wt%) *1 | 28.91 | 28.91 | 28.91 | 28.91 | 28.91 | 28.91 | 28.91 | 44.33 | 28.91 | 28.91 | 28.91 |
| Analysis value of liquid oil and fat | Yield (%) of liquid oil and fat | 64 | 64 | 64 | 63 | 77 | 62 | 67 | 54 | 57 | 64 | - |
| | Polyunsaturated fatty acid content (wt%) *2 | 17.5 | 17.4 | 17.3 | 17.3 | 16.5 | 18.9 | 18.5 | 18.3 | 18.8 | 17.4 | - |
| | SSS content (wt%) *2 | 0.01 | 0.01 | 0.01 | 0.01 | 0.7 | 0.01 | 0.92 | 0.02 | 0.01 | 0.02 | - |
| | S2U content (wt%) *2 | 7._{.}92 | 7.51 | 7.63 | 7.91 | 13.56 | 5.64 | 11.21 | 7.23 | 5.71 | 7.92 | - |
| | SU2 content (wt%) *2 | 40.22 | 40.11 | 40.87 | 40.31 | 41.31 | 36.41 | 37.12 | 38.41 | 36.22 | 40.01 | - |
| | UUU content (wt%) *2 | 40.71 | 39.94 | 40.12 | 40.52 | 34.23 | 45.21 | 41.33 | 43.22 | 45.14 4 | 40.51 | - |
| | SU2/UUU *2 | 1.0 | 1.0 | 1.0 | 1.0 | 1.2 | 0.8 | 0.9 | 0.9 | 0.8 | 1.0 | - |
| | Glyceride having palmitic acid at 2-position (wt%) | 19.1 | 18.8 | 19.1 | 19.2 | 22.8 | 16.6 | 20.2 | 18.2 | 16.6 | 19.0 | - |
| | Cloudy point (°C) | -3.8 | -4 | -4.3 | -4.2 | 5 | -6.3 | 3.6 | -5.1 | -6.1 | -3.8 | - |
| | Iodine number | 82 | 82 | 82 | 82 | 79 | 87 | 85 | 84 | 87 | 82 | - |

| | | | | | | | | | | | | |
|---|---|---|---|---|---|---|---|---|---|---|---|---|
| *1 Content based on the total amount of a raw material oil and fat; *2 Content based on the total amount of a liquid oil and fat . | | | | | | | | | | | | |

### (Example 28) Production of Solid Fat

Into a separable flask, 5,000 parts by weight of palm olein (iodine number: 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for 8 hours. After confirming that the SSS content reached 27% by weight and the S2U content reached 11.6% by weight based on the total amount of oil and fat during the reaction, 50 parts by weight of water was added as a reaction terminating agent to terminate the reaction. Then, the reaction mixture was heated to dissolve all crystals. Next, 5,000 parts by weight of warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 10°C, the temperature was maintained for crystallization until the total time from the start of temperature drop reached 24 hours. After the crystallization, the mixture was filtered with a filter press (pressurized to 3 MPa) to afford 2,250 parts by weight of solid fat (yield: 45%) having an SSS content of 59% by weight, a PPP content of 45% by weight, and a glyceride having palmitic acid at 2-position content of 76% by weight, in the total amount of the solid fat.

### (Example 29) Production of Solid Fat

Into a separable flask, 5,000 parts by weight of palm olein (iodine number: 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for 8 hours and further direct-transesterified at 25°C for about 24 hours. After confirming that the SSS content reached 30% by weight and the S2U content reached 9.4% by weight based on the total amount of oil and fat during the reaction, 50 parts by weight of water was added as a reaction terminating agent to terminate the reaction. Then, the reaction mixture was treated in the same manner as in Example 28 to afford 2,300 parts by weight of solid fat (yield: 46%) having an SSS content of 64% by weight, a PPP content of 48% by weight, and a glyceride having palmitic acid at 2-position content of 82% by weight, in the total amount of the solid fat.

### (Example 30) Production of Solid Fat

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct - tra nse sterified at 30°C for 8 hours, at 27.5°C for 2 hours, at 25°C for 12 hours, and at 22.5°C for about 24 hours. After confirming that the SSS content reached 23% by weight and the S2U content reached 10.6% by weight based on the total amount of oil and fat during the reaction, 50 parts by weight of water was added as a reaction terminating agent to terminate the reaction. Then, the reaction mixture was treated in the same manner as in Example 28 to afford 1,950 parts by weight of solid fat (yield: 39%) having an SSS content of 59% by weight, a PPP content of 45% by weight, and a glyceride having palmitic acid at 2-position content of 75% by weight, in the total amount of the solid fat.

### (Example 31) Production of Solid Fat

Into a separable flask, 5,000 parts by weight of palm olein (iodine number: 64) was charged and vacuum dehydration was carried out at 90° C while stirring at 100 rpm. Then, 10 parts by weight of sodium methoxide was added and the temperature was maintained at 90°C for 20 minutes, followed by cooling. The palm olein was direct-transesterified at 30°C for 8 hours, at 27.5°C for 2 hours, at 25°C for 2 hours, at 22.5°C for 5 hours, and at 18°C for about 15 hours. After confirming that the SSS content reached 29% by weight and the S2U content reached 3.8% by weight based on the total amount of oil and fat during the reaction, 50 parts by weight of water was added as a reaction terminating agent to terminate the reaction. Then, the reaction mixture was treated in the same manner as in Example 28 to afford 2,250 parts by weight of solid fat (yield: 45%) having an SSS content of 64% by weight, a PPP content of 49% by weight, and a glyceride having palmitic acid at 2-position content of 83% by weight, in the total amount of the solid fat.

### (Example 32) Production of Solid Fat

Into a separable flask, 5,000 parts by weight of palm olein (iodine number: 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 27% by weight and the S2U content reached 11.6% by weight based on the total amount of oil and fat during the reaction, 50 parts by weight of water was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 30°C, the temperature was maintained for crystallization until the total time from the start of temperature drop reached 24 hours. After the crystallization, the mixture was filtered with a filter press (pressurized to 3 MPa) to afford 2,050 parts by weight of solid fat (yield: 41%) having an SSS content of 68% by weight, a PPP content of 52% by weight, and a glyceride having palmitic acid at 2-position content of 70% by weight, in the total amount of the solid fat.

### (Example 33) Production of Solid Fat

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 18% by weight and the S2U content reached 13.5% by weight based on the total amount of oil and fat during the reaction, 50 parts by weight of water was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 30°C, the temperature was maintained for crystallization until the total time from the start of temperature drop reached 24 hours. After the crystallization, the mixture was filtered to remove a soft part using a filter press (pressurized to 3 MPa), then the temperature was raised to 45°C while releasing the pressure, and the mixture was pressurized to 3 MPa again. Then, the temperature was further raised to 60°C and the mixture was pressurized to 3 MPa once again, thereby affording 400 parts by weight of solid fat (yield: 8%) having an SSS content of 95% by weight, a PPP content of 78% by weight, and a glyceride having palmitic acid at 2-position content of 91% by weight, in the total amount of the solid fat.

### (Example 34) Production of Solid Fat

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 18% by weight and the S2U content reached 13.5% by weight based on the total amount of oil and fat during the reaction, 50 parts by weight of water was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 20°C, the temperature was maintained for crystallization until the total time from the start of temperature drop reached 24 hours. After the crystallization, the mixture was filtered to remove a soft part using a filter press (pressurized to 3 MPa), then the temperature was raised to 45°C while releasing the pressure, and the mixture was pressurized to 3 MPa again. The temperature was further raised to 55°C and the mixture was pressurized to 3 MPa once again, thereby affording 1,000 parts by weight of solid fat (yield: 20%) having an SSS content of 80% by weight, a PPP content of 61% by weight, and a glyceride having palmitic acid at 2-position content of 82% by weight, in the total amount of the solid fat.

### (Example 35) Production of Solid Fat

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 18% by weight and the S2U content reached 13.5% by weight based on the total amount of oil and fat during the reaction, 50 parts by weight of water was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 20°C, the temperature was maintained for crystallization until the total time from the start of temperature drop reached 24 hours. After the crystallization, the mixture was filtered to remove a soft part using a filter press (pressurized to 3 MPa), then the temperature was raised to 45°C while releasing the pressure, and the mixture was pressurized to 3 MPa again. The temperature was further raised to 50°C and the mixture was pressurized to 3 MPa once again, thereby affording 1,150 parts by weight of solid fat (yield: 23%) having an SSS content of 73% by weight, a PPP content of 56% by weight, and a glyceride having palmitic acid at 2-position content of 84% by weight, in the total amount of the solid fat.

### (Example 36) Production of Solid Fat

Into a separable flask, 5,000 parts by weight of palm olein (iodine number: 57) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 30°C for about 8 hours. After confirming that the SSS content reached 27% by weight and the S2U content reached 11.6% by weight based on the total amount of oil and fat during the reaction, 50 parts by weight of water was added as a reaction terminating agent to terminate the reaction. Then, the reaction mixture was heated to dissolve all crystals and warm water at 70°C was added. The mixture was allowed to leave to be separated into an oil layer and an aqueous layer, and the aqueous layer was removed, thereby performing warm water washing. The warm water washing was repeated until the separated aqueous layer obtained a pH of 8 or less, then the oil and fat in the oil layer was heated at 90°C, and vacuum dehydration was carried out. Then, 2 parts by weight of white clay was added. The mixture was stirred for 20 minutes and then was filtered to remove the white clay, thereby performing decoloration. The temperature after the decoloration was lowered at a rate of 1°C/min (set value) to 40°C and at a rate of 0.2°C/min (set value) from 40°C. After the temperature reached 20°C, the temperature was maintained for crystallization until the total time from the start of temperature drop reached 24 hours. After the crystallization, the mixture was filtered to remove a soft part using a filter press (pressurized to 3 -MPa), then the temperature was raised to 45°C while releasing the pressure, and the mixture was pressurized to 3 MPa again. The temperature was further raised to 55°C and the mixture was pressurized to 3 MPa once again, thereby affording 1,500 parts by weight of solid fat (yield: 32%) having an SSS content of 83% by weight, a PPP content of 65% by weight, and a glyceride having palmitic acid at 2-position content of 83% by weight, in the total amount of the solid fat.

### (Comparative Example 5) Production of Solid Fat

Into a separable flask, 5,000 parts by weight of palm olein (iodine number: 57) was charged and vacuum dehydration was carried out at 90°C while stirring at 100 rpm. Then, 10 parts by weight of sodium methoxide was added and the temperature was maintained at 90°C for 20 minutes, followed by cooling. The palm olein was direct-transesterified at 30°C for 8 hours, at 27.5°C for 2 hours, at 25°C for 2 hours, at 22.5°C for 5 hours, and at 18°C for about 15 hours. After confirming that the SSS content reached 37% by weight and the S2U content reached 3.4% by weight based on the total amount of oil and fat during the reaction, 50 parts by weight of water was added as a reaction terminating agent to terminate the reaction. Then, the reaction mixture was treated in the same manner as in Example 28 to afford 4,150 parts by weight of solid fat (yield: 82%) having an SSS content of 44% by weight, a PPP content of 33% by weight, and a glyceride having palmitic acid at 2-position content of 36% by weight, in the total amount of the solid fat.

### (Comparative Example 6) Production of Solid Fat

Into a separable flask, 5,000 parts by weight of palm olein (iodine number: 64) was charged and vacuum dehydration was carried out at 90°C while stirring at 100 rpm. Then, 5 parts by weight of sodium methoxide was added and the temperature was maintained at 90°C for 20 minutes, followed by cooling. The palm olein was direct-transesterified at 36°C for about 8 hours. After confirming that the SSS content reached 13% by weight and the S2U content reached 16.5% by weight based on the total amount of oil and fat during the reaction, 50 parts by weight of water was added as a reaction terminating agent to terminate the reaction. Then, the reaction mixture was treated in the same manner as in Example 28 to afford 1,800 parts by weight of solid fat (yield: 35%) having an SSS content of 36% by weight, a PPP content of 27% by weight, and a glyceride having palmitic acid at 2-position content of 47% by weight, in the total amount of the solid fat.

Table 3 lists the analysis values of the solid fats obtained in Examples 28 to 36 and Comparative Examples 5 and 6.

**[Table 3]**

| Table 3 Analysis value of raw material oil and fat, separation temperature, and analysis value of solid fat | | | | | | | | | | | | |
|---|---|---|---|---|---|---|---|---|---|---|---|---|
| | | Example 28 | Example 29 | Example 30 | Example 31 | Example 32 | Example 33 | Example 34 | Example 35 | Example 36 | Comparative Example 5 | Comparative Example 6 |
| Analysis value of raw material oil and fat | Iodine number | 57 | 57 | 64 | 64 | 57 | 64 | 64 | 64 | 57 | 57 | 64 |
| | SSS (wt%)*1 | 1.1 | 1.1 | 0 | 0 | 1.1 | 0 | 0 | 0 | 1.1 | 1.1 | 0 |
| | S2U(wt%)*1 | 44.3 | 44.3 | 28.9 | 28.9 | 44.3 | 28.9 | 28.9 | 28.9 | 44.3 | 44.3 | 28.9 |
| Separation temperature | First step (°C) | 10 | 10 | 10 | 10 | 30 | 30 | 20 | 20 | 20 | 10 | 10 |
| | Second step (°C) | - | - | - | - | - | 60 | 55 | 50 | 55 | - | - |
| Analysis value of solid fat | Yield (%) of solid fat | 45 | 46 | 39 | 45 | 41 | 8 | 20 | 23 | 32 | 82 | 35 |
| | SSS (wt%) *2 | 59 | 64 | 59 | 64 | 68 | 95 | 80 | 73 | 83 | 44 | 36 |
| | PPP (wt%) *2 | 45 | 48 | 45 | 49 | 52 | 78 | 61 | 56 | 65 | 33 | 27 |
| | Glyceride having palmitic acid at 2-position (wt%) | 76 | 82 | 75 | 83 | 70 | 91 | 82 | 84 | 83 | 36 | 47 |

| | | | | | | | | | | | | |
|---|---|---|---|---|---|---|---|---|---|---|---|---|
| *1 Content based on the total amount of a raw oil and fat: *2 Content in a solid fat. | | | | | | | | | | | | |

As shown in Table 3, according to the present invention, a solid fat containing a large amount of glycerides having palmitic acid at 2-position can be produced,

## Claims

1. A liquid oil derived from palm oil, the liquid oil being obtained from palm based oil and fat as a main raw material and having an SU2/UUU ratio by weight of 1.9 or less and an SSS content of 2% by weight or less.

2. The liquid oil derived from palm oil according to claim 1, wherein the SSS is contained in an amount of 0.5% by weight or less and an S2U is contained in an amount of 10% by weight or less.

3. The liquid oil according to claim 1 or 2, wherein the UUU is contained in an amount of 25% by weight or more.

4. The liquid oil according to any one of claims 1 to 3, wherein a triglyceride bonded with palmitic acid at 2-position is contained in an amount of 10 to 30% by weight.

5. The liquid oil according to any one of claims 1 to 4, wherein the liquid oil has a cloudy point ranging from 0°C to -12°C.

6. A method for producing the liquid oil as claimed in any one of claims 1 to 5, the method comprising:
using a palm based oil and fat containing a saturated fatty acid in an amount of 70% by weight or less based on the total amount of constituent fatty acids, as a main raw material;
direct- transe sterifying the palm based oil and fat until the oil and fat obtains an SSS/S2U ratio of 0.5 or more;
terminating the reaction; and thereafter
separating and removing a hard part.

7. The method for producing the liquid oil according to claim 6, wherein the palm based oil and fat is direct-transesterified until the oil and fat obtains an SSS/S2U ratio of 2.0 or more and then the reaction is terminated.

8. A method for producing the liquid oil as claimed in any one of claims 1 to 5, the method comprising:
using a palm based oil and fat containing a saturated fatty acid in an amount of 70% by weight or less based on the total amount of constituent fatty acids, as a main raw material;
direct-transesterifying the palm based oil and fat while applying external force thereby to move the oil and fat; and thereafter
separating a hard part while keeping the solid fat content at more than 1% by weight.

9. The method for producing the liquid oil according to claim 8, wherein the palm based oil and fat is direct-transesterified until the oil and fat obtains an SSS/S2U ratio of 0.5 or more and then the reaction is terminated.

10. The method for producing the liquid oil according to any one of claims 6 to 9, wherein the palm based oil and fat is direct-transesterified until the oil and fat obtains an S2U content of 14% by weight or less, while the oil and fat keeping an SSS content of 31% by weight or less during the reaction, and then the hard part is separated and removed.

11. The method for producing the liquid oil according to any one of claims 6 to 10, wherein the palm based oil and fat contains the saturated fatty acid in an amount of 3 to 52% by weight based on the total amount of constituent fatty acids.

12. The method for producing the liquid oil according to any one of claims 6 to 11, wherein the palm based oil and fat is palm olein.

13. The method for producing the liquid oil according to any one of claims 6 to 12, wherein soybean oil and/or rapeseed oil is used as an oil and fat in addition to the palm based oil and fat.

14. The method for producing the liquid oil according to any one of claims 6 to 13, wherein the direct transesterification is carried out at a temperature of 0°C to 40°C.

15. The method for producing the liquid oil according to any one of claims 6 to 14, wherein the separation is dry separation.

16. The method for producing the liquid oil according to claim 15, wherein the dry separation is carried out at a temperature of 0°C to 45°C.

17. The method for producing the liquid oil according to claim 15, wherein the dry separation is carried out at a temperature of 0°C to 10°C.

18. A liquid oil produced by the method as claimed in any one of claims 6 to 17.

19. A food containing the liquid oil as claimed in any one of claims 1 to 5.

20. A food containing the liquid oil as claimed in claim 18.

21. A method for producing a solid fat concurrently with a liquid oil, the method comprising:
using a palm based oil and fat containing a saturated fatty acid in an amount of 70% by weight or less based on the total amount of constituent fatty acids, as a main raw material;
direct-transesterifying the palm based oil and fat until the oil and fat obtains an SSS/S2U ratio of 0.5 or more;
terminating the reaction; and thereafter
separating and removing a liquid oil.

22. A method for producing a solid fat concurrently with a liquid oil, the method comprising:
using a palm based oil and fat containing a saturated fatty acid in an amount of 70% by weight or less based on the total amount of constituent fatty acids, as a main raw material;
direct-transesterifying the palm based oil and fat while applying external force thereby to move the oil and fat; and thereafter
separating and removing a liquid oil while keeping the solid fat content at more than 1% by weight.

23. The method for producing a solid fat concurrently with a liquid oil according to claim 21 or 22, wherein the palm based oil and fat is direct-transesterified until the oil and fat obtains an S2U content of 14% by weight or less, while the oil and fat keeping an SSS content of 31% by weight or less during the reaction, and then the liquid oil is separated and removed.
